# EUROPEAN PATENT SPECIFICATION

(11) **EP 1 070 957 B1**
(45) Date of publication and mention of the grant of the patent: **23.11.2005**
(21) Application number: 00104840.4
(22) Date of filing: 07.03.2000
(51) Int. Cl.: G01N 21/41, G01N 30/74

(54) **Differential refractive index detector and liquid chromatograph equipped with the same**
Differential-Refraktometer und damit ausgerüsteter Flüssigkeits-Chromatograph
Réfractomètre différentiel et chromatographe en phase liquide ainsi équipé

(30) Priority: 23.07.1999 JP 20997899
(43) Date of publication of application: 24.01.2001
(73) Proprietor: SHOWA DENKO KABUSHIKI KAISHA, Minato-ku, Tokyo (JP); Erc Inc., Kawaguchi-shi, Saitama-ken (JP)
(72) Inventor: Tokieda, Tsunemi, Showa Denko K.K., Kawasaki Works, Kawasaki-shi, Kanagawa-ken (JP); Nogami, Yukio, Showa Denko K.K., Kawasaki Works, Kawasaki-shi, Kanagawa-ken (JP); Inoue, Saburo, c/o ERC INC., Kawaguchi-shi, Saitama-ken (JP)
(74) Representative: Strehl Schübel-Hopf & Partner

(56) References cited:
- GB-A- 2 054 842
- US-A- 2 810 315
- US-A- 5 398 110
- HANCOCK D O ET AL: "REFRACTIVE INDEX GRADIENT DETECTION OF FEMTOMOLE QUANTITIES OF POLYMERS BY MICROBORE SIZE-EXCLUSION CHROMATOGRAPHY" ANALYTICAL CHEMISTRY, AMERICAN CHEMICAL SOCIETY. COLUMBUS, US, vol. 60, no. 18, 15 September 1988 (1988-09-15), pages 1915-1920, XP000021332 ISSN: 0003-2700

## Description

### BACKGROUND OF THE INVENTION

### Technical field

The present invention relates to a differential refractive index detector and a liquid chromatograph equipped with the same.

More specifically, the present invention relates to a differential refractive index detector which can automatically perform the processing from the eluent purge operation of reference cell at the start of operation until the stability confirming operation by judging whether or not the detector was stabilized in an analysis capable condition, thereby enabling more efficient analysis work, and also relates to a liquid chromatograph equipped with the detector.

### Related Art

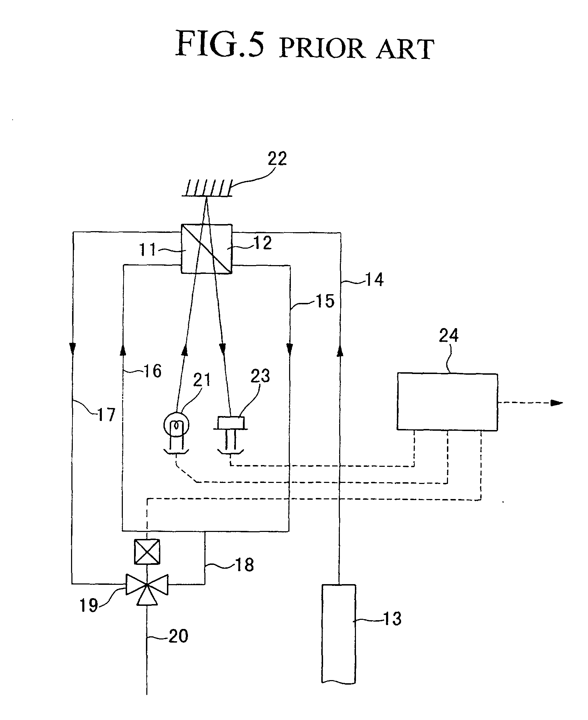

Fig. 5 is a block diagram showing the outline of a conventional differential refractive index detector for a liquid chromatograph. as disclosed in Shodex, Operation Manual, No. 858 August, 1984 and which discloses the closest prior art. As shown in Fig. 5, a conventional differential refractive index detector comprises two cells 11 and 12 consisting of a reference cell 11 for filling with or passage of a reference solution and a sample cell 12 through which a solution containing a sample is passed. These cells 11 and 12 are disposed such that their slant faces oppose each other. The sample cell 12 is connected by an eluent inlet line 14 for introducing an eluent eluted from a separation column 13 and by a sample cell outlet line 15. The reference cell 11 is connected by a reference cell inlet line 16 communicating with the sample cell outlet line 15 and by a reference cell outlet line 17.

At the connection between the reference cell outlet line 17 and a line 18 externally extended from the connection of the sample outlet line 15 with the reference cell inlet line 16, a three-way solenoid valve 19 is provided. To this three-way solenoid valve 19, an eluent outlet line 20 for discharging the eluent outside is connected. By intermittently switching over the three-way solenoid valve 19 on demand, the eluent which was flowed out from the sample cell 12 can be intermittently allowed to flow into the reference cell 11.

On one side with respect to the reference cell 11 and the sample cell 12, a light source 21 for irradiating a measuring beam is provided, and on the other side, a reflector 22 for reflecting the measuring beam transmitted through these cells 11 and 12 is provided. Furthermore, in the vicinity of the light source 21, a photoreceptor device for detecting the displacement of the measuring beam accompanying the difference in the refractive index of the eluent in the two cells 11 and 12 is provided.

The light source 21, the photoreceptor device 23 and the three-way solenoid valve 19 converge at a signal processing part 24. The signal processing part 24 has a function of outputting the difference in refractive index of the eluent into two cells 11 and 12 as an electric signal based on a signal sent from the photoreceptor device 23 and at the same time, controlling the driving of three-way solenoid valve 19 and the driving of light source 21 based on an operation signal sent from the outside.

In the conventional differential refractive index detector, electric power is charged and then start-up is initiated by an input unit not shown, as a result, the three-way solenoid valve 19 is actuated through the signal processing part 24 to bring a state such that the piping 18 is closed and the reference cell outlet line 17 communicates with the eluent outlet line 20.

Subsequently, the following operations are performed in sequence.

### (1) Initial Solution Purge Operation

This is an operation of purging the inside of the reference cell 11 with an eluent at the start of operation of the differential refractive index detector.

### (2) Stabilizing Solution Purge Operation

This is an operation of confirming whether factors other than the change of refractive index are in a stabilized condition by continuously passing an eluent which has flowed out from the sample cell 12, through the reference cell 11.

### (3) Stability Confirming Operation

This is an operation of confirming whether or not the differential refractive index detector has stabilized in an analysis capable condition while keeping the flow passage in an analyzable condition by stopping the flow of eluent into the reference cell 11.

Through these operations, the differential refractive index detector can be stabilized in an analysis capable condition.

In the case where a conventional differential refractive index detector is used as a liquid chromatograph detector, the change in the refractive index of the eluent causes a serious problem. The refractive index of the eluent changes not only with the elution of a sample but also by the staining of eluent itself, the dissolved gas concentration, the temperature and the like. Accordingly, in order to stabilize the differential refractive index detector at the start of operation, unlike an ultraviolet absorbance detector which is a general liquid chromatograph detector, an initial solution purge operation of purging the referential cell 1 with a solution at the start of operation and subsequently stabilizing the solution purge operation, and stability confirming operation of monitoring the output signal (chromatogram) over a relatively long period of time until a stable condition is reached are necessary. Thus, much labor and a long period of time are disadvantageously required.

Furthermore, the judgement that the differential refractive index detector has reached a stable condition is made by intuition in many cases and greatly depends on the experience and skill of the judging person. This naturally brings about great personal errors in the judgement of stable condition. Depending on the case, the condition may be excessively stable or may be deficient in stability. Thus, this intuitive judgement is disadvantageous in that an efficient operation cannot be attained.

### SUMMARY OF THE INVENTION

The present invention was developed in order to solve the problems described above. It is an object of the present invention to provide a differential refractive index detector in which the processing from an initial solution purge operation of intermittently introducing an eluent into a referential cell until a stability confirming operation of confirming that the differential refractive index detector has stabilized in an analysis capable condition are automated, thereby eliminating fears for personal errors in the judgement of stable condition and enabling a highly efficient analysis operation, and also to provide a liquid chromatograph equipped with the detector.

As a result of extensive investigations, the present inventors have found that the above-described objects can be attained by using a differential refractive index detector according to claim 1 and a liquid chromatograph equipped with the detector according to claim 7.

During the time period from the charging of electric power to the stabilization of detector in the analysis capable condition, operations and judgements by an operator are not necessary, therefore, fears for the operations and judgements being governed by the individual skill can be eliminated, as a result, the stable condition can be always kept at a constant level and more efficient analysis work can be attained.

Furthermore, means for announcing that the detector has stabilized in the analysis capable condition is provided, so that the operator can swiftly know that the detector has stabilized in the analysis capable condition and can efficiently perform the analysis work.

As such, the processing from the initial solution purge operation of introducing an eluent into a reference cell until the stability confirming operation of stabilizing the differential refractive index detector into the analysis capable condition can be automated and thereby a highly efficient analysis operation can be attained.

The liquid chromatograph of the present invention is characterized by being equipped with the differential refractive index detector of the present invention.

According to the liquid chromatograph of the present invention, a differential refractive index detector of the present invention is provided, so that the reference cell and the sample cell can be automatically and swiftly stabilized without any participation from an operator and the liquid chromatography can be more efficiently performed.

Furthermore, when the differential refractive index detector of the present invention is applied to a liquid chromatograph, the analysis operation of liquid chromatography can be performed with remarkably high efficiency.

### BRIEF DESCRIPTION OF THE DRAWINGS

Figure 1 is a block diagram showing the signal processing part forming an important part of a differential refractive index detector for a liquid chromatograph according to one embodiment of the present invention.
Figure 2 is a flow chart showing works of a differential refractive index detector for a liquid chromatograph according to one embodiment of the present invention.
Figure 3 is an explanatory view showing the calculation method of drift value in a differential refractive index detector for a liquid chromatograph according to one embodiment of the present invention.
Figure 4 is an explanatory view showing the calculation method of noise value in a differential refractive index detector for a liquid chromatograph according to one embodiment of the present invention.
Figure 5 is a block diagram showing a conventional differential refractive index detector for a liquid chromatograph.

### DESCRIPTION OF PREFERRED EMBODIMENT

Hereinbelow, a preferred embodiment of the present invention will be concretely explained based on the figures, however, the present invention is by no means limited thereto.

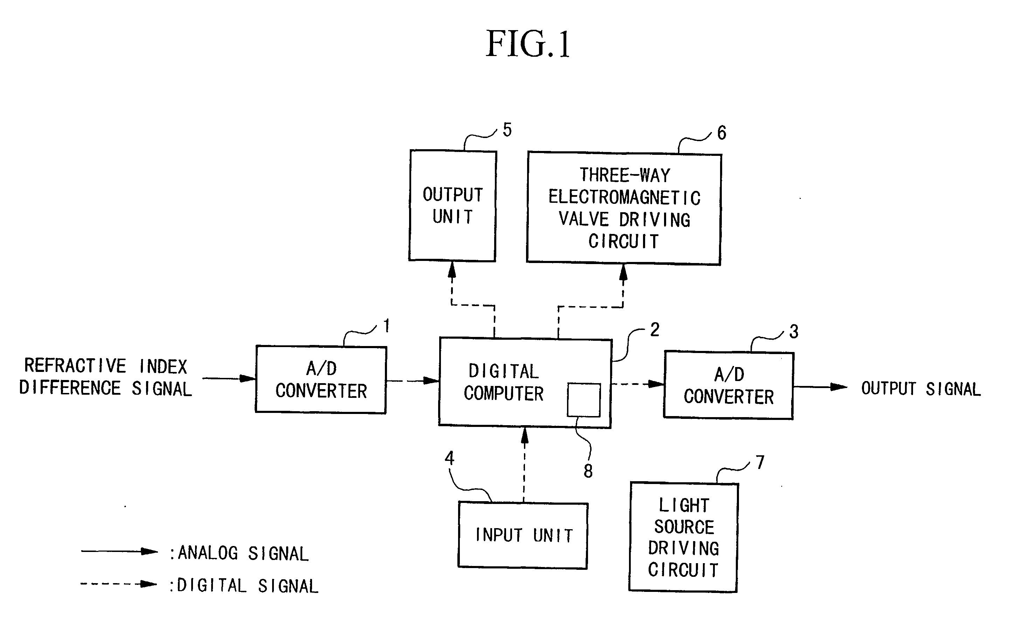

Figure 1 is a block diagram showing the signal processing part forming an important part of a differential refractive index detector for a liquid chromatograph according to one embodiment of the present invention. In the figure, the numeral 1 is an A/D converter where an analog signal corresponding to the displacement of optical axis of light transmitted through a reference cell and a sample cell accompanying the difference in refractive index of the reference solution and the sample solution is output from the photoreceptor device (detection part) not shown and converted into a digital signal; 2 is a digital computer for applying predetermined processing on the digital signal output from the A/D converter 1; and 3 is a D/A converter where the digital signal as a result of processing is output from the digital computer and converted into an analog signal to output it as an output signal.

The numeral 4 is an input unit for inputting parameters such as respective limits of drift value and noise value or giving indications relating to the operations such as actuation or stopping and also for inputting input data or the like into the digital computer 2; 5 is an output unit for outputting the processing result output from the digital computer 2 with respect to the operating state, for example, whether or not the detector has stabilized in a analysis capable condition; 6 is a three-way solenoid valve driving circuit for driving a three-way solenoid valve by switching over the flow passage of eluent to the reference cell or sample cell; and 7 is a light source driving circuit for driving a light source not shown.

The output unit 5 has announcing means for announcing that the detector has stabilized in an analysis capable condition when it is confirmed in the stability confirming operation and also for announcing that the condition where the drift value described later is larger than the drift limit and/or the noise value is larger than the noise limit is continuing in excess of a predetermined time. The announcing means is a display unit such as display, an acoustic unit of making announcement by sound or an audio unit of making announcement by voice. Also, a unit of making the announcement by vibration or the like may be mounted as the announcing means.

The digital computer 2 stores a program (means) 8 as a previously established time series procedure.

According to this program 8, the following work is sequentially undertaken.

### (1) Initial Solution Purge Operation

The eluent passed through the sample cell at the start of operation of detector is intermittently passed through the reference cell according to the previously established time series procedure to eliminate bubbles in the sample cell and the reference cell and also to roughly perform the eluent purge.

### (2) Stabilizing Solution Purge Operation

After the completion of the initial solution purge operation, while keeping the eluent which has flowed out from the sample passing through the reference cell, a drift value and a noise value are determined from a signal corresponding to the difference in refractive index based on the signal sent from the photoreceptor device. These values are compared with a previously set drift limit and a noise limit and when the drift value is smaller than the drift limit and at the same time, the noise value is smaller than the noise limit, the eluent passed through the sample cell is stopped from passing through the reference cell. When the drift value is larger than the drift limit and/or the noise value is larger than the noise limit, the comparison operation is again performed.

### (3) Stability Confirming Operation

While passing the eluent only through the sample cell, a drift value and a noise value are determined from a signal corresponding to the difference in refractive index based on the signal from the photoreceptor device. These values are compared with previously set drift limit and noise limit and when the drift value is smaller than the drift limit and at the same time, the noise value is smaller than the noise limit, the detector is judged to have stabilized in the analysis capable condition. When the drift value is larger than the drift limit and/or the noise value is larger than the noise limit, the comparison operation is again performed.

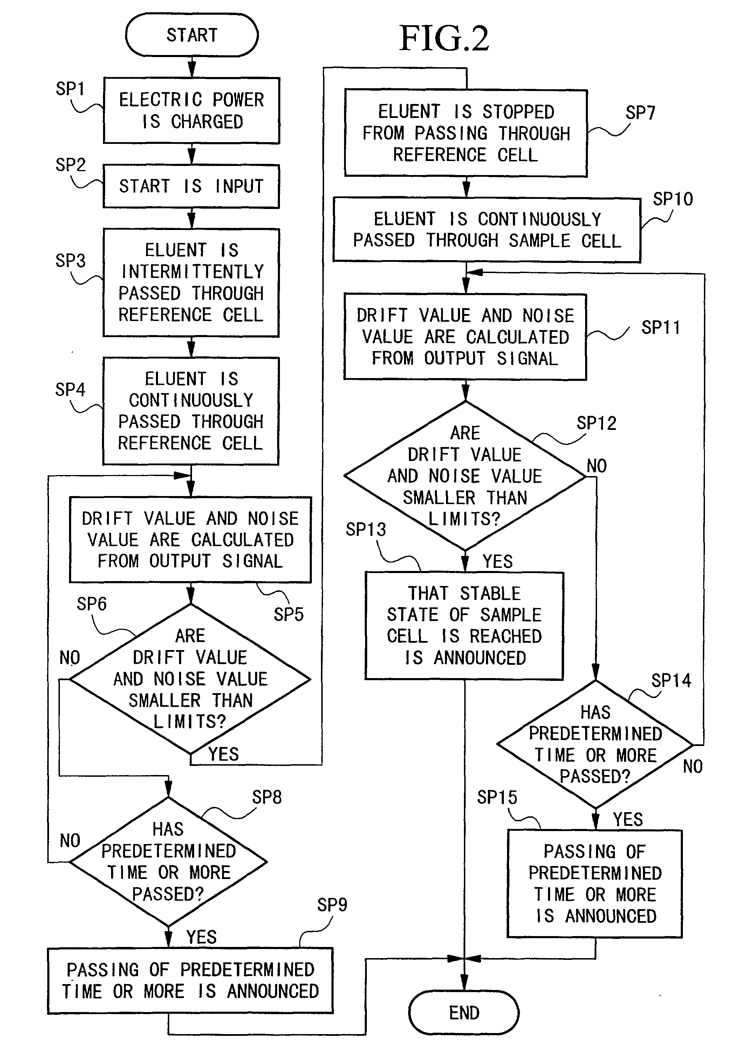

The working of the differential refractive index detector according to this embodiment is described below by referring to the flow chart shown in Figure 2.

### (1) Initial Solution Purge Operation

Electric power is charged (SP1) and when a START signal is inputted from the input unit 4 (SP2), the three-way solenoid valve driving circuit 6 is driven to flush the three-way solenoid valve and allow the eluent passed through from the sample cell to intermittently pass through the reference cell, whereby bubbles in the sample cell and the reference cell are eliminated and also rough eluent purge is attained (SP3).

### (2) Stabilizing Solution Purge Operation

After the completion of initial solution purge operation, the three-way solenoid valve driving circuit is driven to open the three-way solenoid valve and continuously pass the eluent which has flowed out from the sample cell through the reference cell (SP4).

While keeping the eluent continuously passing through the reference cell, a drift value and a noise value are calculated by a signal corresponding to the difference in refractive index based on the signal sent from a photoreceptor device not shown (SP5).

Thereafter, the drift value and the noise value calculated are compared with the drift limit and the noise limit which are previously input by the input unit 4 (SP6).

At this time, when the drift value and the noise value both have become smaller than the limits, the three-way solenoid valve driving circuit 6 is driven to switch the flow passage and stop the flow of eluent into the reference cell (SP7).

When the drift value is larger than the drift limit and/or the noise value is larger than the noise limit in SP6, whether or not this state has continued in excess of a predetermined time (SP8) is determined. When the state is found not continuing in excess of a predetermined time, the works of from SP5 to SP6 is repeated, and when the state is determined to be continuing in excess of a predetermined time, the announcing means announces that a predetermined time or more has passed (SP9) and the work is terminated.

### (3) Stability Confirming Operation

After the completion of the stabilizing solution purge operation, the eluent is continuously passed through the sample cell (SP10) and in this state, a drift value and a noise value are calculated from a signal corresponding to the difference in refractive index based on the signal sent from the photoreceptor device not shown (SP11). The drift value and the noise value calculated are compared with the drift limit and the noise limit previously input by the input unit 24 (SP12).

At this time, when the drift value and the noise value both have become smaller than respective limits, the announcing means announces that the detector has reached a condition capable of analysis (SP13) and the work is terminated.

When the drift value is larger than the drift limit and/or the noise value is larger than the noise limit in SP12, whether or not this state has continued in excess of a predetermined time (SP14) is determined. When the state is determined to be not continuing in excess of a predetermined time, the work of from SP11 to SP12 is repeated, and when the state is determined to be continuing in excess of a predetermined time, the announcing means announces that a predetermined time or more has passed (SP15) and the works are terminated.

The methods for calculating the drift value and the noise value are described below.

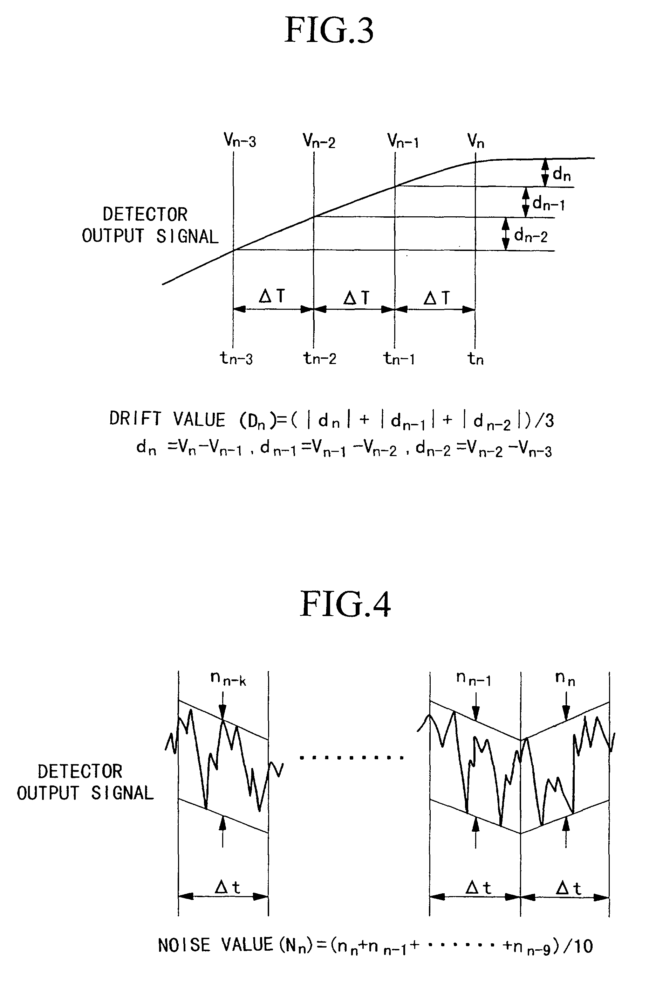

In the calculation of the drift value, as shown in Figure 3, an output signal value is measured at predetermined time intervals delta T (for example, from 3 to 15 minutes) and an absolute value of the difference between the output signal value at the time concerned and the output signal value at the preceding time is calculated and stored as the this-time value. In the same manner, the value calculated last time is stored as the last-time value, and the value calculated before last time is as the before-last-time value. A simple average of these this-time value, last-time value and before-last-time value is defined as the drift value at the time concerned.

Also, the drift value at the time concerned may be a smoothed value obtained using a smoothing constant. The output signal value at each measurement time may be an average of a plurality of measurements so as to reduce the dispersion in the measurement.

In the calculation of the noise value, as shown in Figure 4, instantaneous noise values are obtained in a plurality of blocks (k+1 blocks, wherein k is an integer satisfying, for example, 9≦k≦29) divided at predetermined time intervals delta t (for example, from 0.5 to 1 minute) and an average of the instantaneous noise values obtained is defined as the noise value at the time concerned.

In the determination of the instantaneous noise value, as shown in Figure 4, straight lines are drawn to include the minimum output signal value in a block and at the same time contact with one or more other output signal value. Out of these straight lines, a straight line having a smallest absolute value of gradient is picked up and on taking account of the relationship between this straight line and the output signal, a maximum value among absolute values of the difference at the same time instant is determined. Similarly, straight lines are drawn to include the maximum output signal value in a block and at the same time contact with one or more other output signal value. Out of these straight lines, a straight line having a smallest absolute value of gradient is picked up and on taking account of the relationship between this straight line and the output signal, a maximum value among absolute values of the difference at the same time instant is determined. A larger value of these values determined is defined as the instantaneous noise value of the block concerned. It is also possible to use a smaller value of the maximum values determined as the instantaneous noise value.

According to the differential refractive index detector of this embodiment, a program is stored in the digital computer 22, which is composed such that an initial solution purge operation of performing eluent purge by intermittently passing an eluent flown out from the sample cell through the reference cell at the start of operation of the detector, a stabilizing solution purge operation of allowing the eluent purge of the sample cell and the reference cell to proceed and at the same time, confirming the stable condition thereof, and a stability confirming operation of confirming whether or not said detector has stabilized in the analysis capable condition by passing the eluent only through the sample cell are sequentially undertaken. Therefore, the processing from the initial solution purge operation until the stability confirming operation can be automated and a highly efficient analysis operation can be attained.

During the time period from the charging of electric power to the stabilization of detector into the analysis capable condition, operations and judgements by an operator are dispensed with, therefore, fears for the operations and judgements being governed by the individual skill can be eliminated. As a result, the stable condition of factors except for the change of refractive index and the stable condition of the detector, that is, analysis capable condition, can be always kept at a constant level and more efficient analysis work can be attained.

Furthermore, when the differential refractive index detector of this embodiment is applied to a detector of liquid chromatograph, the detector can be automatically and swiftly stabilized without requiring any participation from an operator. Therefore, the analysis operation of liquid chromatography can be performed with remarkably high efficiency.

In the above, the differential refractive index detector according to one embodiment of the present invention is described with reffering to the drawings, however, the specific structure thereof is by no means limited to this embodiment and any change can be made in the design as long as it does not depart from the spirit and scope of the present invention.

For example, the width of predetermined time intervals delta T or delta t used in the calculation method of drift value or noise value, or the number of absolute values of difference used for the simple averaging may be appropriately changed according to the apparatus to which the detector is applied.

## Claims

1. A differential refractive index detector comprising: a reference cell (11) for filling or passing a reference solution, a sample cell(12) for passing a solution containing a sample, switching means (19) for allowing an eluent which has flowed out from the sample cell (12) to intermittently flow into the reference cell (11), a light source (21) for irradiating light on said two cells(11,12), a detecting part (23) for detecting light transmitted through respective cells(11,12), a signal processing part (24),for applying a predetermined processing to the output signal sent from said detecting part (23), **characterized by**
- means (8) for sequentially performing
(a) an initial solution purge operation of purging said sample cell (12) and said reference cell (11) with an eluent by passing the eluent through the cells(11,12) at the start of the operation of said detector,
(b) a stabilizing solution purge operation of allowing the eluent purge of said sample cell (12) and said reference cell(11) to proceed and at the same time, confirming the stable condition thereof, and
wherein the means for performing the stabilizing solution purge operation comprise
- means for obtaining a drift value and a noise value from said output signal while the switching means (19) is in a state allowing the eluent to flow from the sample cell (12) into the reference cell (11),
- means for comparing the values obtained with a previously set drift limit and noise limit, and
- means for either
i) stopping the eluent passed trough said sample cell (12) from passing through said reference cell (11) when said drift value is smaller than said drift limit and at the same time, said noise value is smaller than said noise limit or
ii) performing again the operation of obtaining said drift value and noise value and comparing these values with the previously set drift and noise limit when said drift value is larger than said drift limit and/or said noise value is larger than said noise limit,
(c) a stability confirming operation of confirming whether or not said detector has stabilized in an analysis capable condition by passing said eluent only through said sample cell (12) and wherein the apparatus further comprises
- means for announcing that said detector has stabilized in the analysis capable condition.

2. The detector of claim 1, wherein means are provided to activate the means (19) to intermittently pass an eluent passed trough said sample cell according to a previously set time series procedure during the initial solution purge operation.

3. The detector of claim 1 or 2 wherein the means for performing the stability confirming operation comprise means for obtaining a drift value and a noise value from said output signal while passing the eluent only through said sample cell (12), means for comparing the values obtained with a previously set drift limit and noise limit, and means for
i) either judging the detector to have stabilized in the analysis capable condition when said drift value is smaller than said drift limit and at the same time, said noise value is smaller than said noise limit, or
ii) for again performing the operation of obtaining said drift value and noise value and comparing these values, when said drift value is larger than said drift limit and/or said noise value is larger than said noise limit.

4. The detector of any of the preceding claims further comprising means for announcing that the state where said drift value is larger than said drift limit and/or said noise value is larger than said noise limit has continued in excess of a predetermined time.

5. The detector of claim 3 or 4 further comprising means for obtaining a drift value by measuring the value of said output signal at predetermined time intervals, calculating an absolute value of the difference between the value of output signal at the time concerned and the value of output signal at a precedent time, and averaging the absolute values calculated.

6. The detector of claim 3 or 4 further comprising means for obtaining said noise value by averaging respective instantaneous noise values of a plurality of blocks divided at predetermined time intervals.

7. A liquid chromatograph equipped with the differential refractive index detector described in any one of the preceding claims.

## Patentansprüche

1. Differential-Brechungsindex-Detektor mit einer Referenzzelle (11) zum Einfüllen oder Weiterleiten einer Referenzlösung, einer Probenzelle (12) zum Weiterleiten einer eine Probe enthaltenden Lösung, einer Umschalteinrichtung (19), die es einem aus der Probenzelle (12) ausgeströmten Elutionsmittel erlaubt, intermittierend in die Referenzzelle (11) zu strömen, einer Lichtquelle (21) zum Bestrahlen von Licht auf die zwei Zellen (11, 12), einem Detektionsteil (23) zum Erfassen von durch die jeweiligen Zellen (11, 12) transmittiertem Licht, einem Signalverarbeitungsteil (24) zum Anwenden eines vorbestimmten Verfahrens auf das von dem Detektionsteil (23) ausgesendete Ausgabesignal, **gekennzeichnet durch**
- eine Einrichtung (8) zum sequentiellen Durchführen
(a) einer anfänglichen Lösungsreinigungsoperation, in der die Probenzelle (12) und die Referenzzelle (11) mit einem Elutionsmittel gereinigt werden, indem das Elutionsmittel bei Beginn des Betriebs des Detektors **durch** die Zellen (11, 12) geleitet wird,
(b) einer stabilisierenden Lösungsreinigungsoperation, in der die Elutionsmittel-Reinigung der Probenzelle (12) und der Referenzzelle (11) ermöglicht und gleichzeitig der stabile Zustand davon bestätigt wird, und
wobei die Einrichtung zum Durchführen der stabilisierenden Lösungsreinigungsoperation aufweist:
- eine Einrichtung zum Gewinnen eines Driftwerts und eines Rauschwerts aus dem Ausgabesignal, während die Umschalteinrichtung (19) sich in einem Status befindet, in dem das Elutionsmittel von der Probenzelle (12) in die Referenzzelle (11) fließen kann,
- eine Einrichtung zum Vergleichen der gewonnenen Werte mit einem zuvor gesetzten Drift-Grenzwert und Rausch-Grenzwert, und
- eine Einrichtung um entweder
(i) das **durch** die Probenzelle (12) durchgeleitete Elutionsmittel daran zu hindern, **durch** die Referenzzelle (11) hindurchzuströmen, wenn der Driftwert kleiner ist als der Drift-Grenzwert und gleichzeitig der Rauschwert kleiner ist als der Rausch-Grenzwert, oder
(ii) die Operation zur Gewinnung des Driftwerts und des Rauschwerts erneut durchzuführen und diese Werte mit den zuvor eingestellten Drift- und Rauschgrenzwerten zu vergleichen, wenn der Driftwert größer ist als der Drift-Grenzwert und/oder der Rauschwert größer ist als der Rausch-Grenzwert,
(c) einer Stabilitätsbestätigungsoperation, in der bestätigt wird, ob der Detektor sich in einem analysefähigen Zustand stabilisiert hat, indem das Elutionsmittel nur **durch** die Probenzelle (12) geleitet wird, und wobei das Gerät ferner aufweist:
- eine Einrichtung zum Bekanntgeben, daß der Detektor sich in einem analysefähigen Zustand stabilisiert hat.

2. Detektor nach Anspruch 1, wobei eine Einrichtung vorgesehen ist, um die Einrichtung (19) zum intermittierenden Durchleiten eines durch die Probenzelle durchgeleiteten Elutionsmittels gemäß einer zuvor eingestellten Zeitabfolge während der anfänglichen Lösungsmittel-Reinigungsoperation zu aktivieren.

3. Detektor nach Anspruch 1 oder 2, wobei die Einrichtung zum Durchführen der Stabilitätsbestätigungsoperation aufweist: eine Einrichtung zum Gewinnen eines Driftwerts und eines Rauschwerts aus dem Ausgabesignal, während das Elutionsmittel nur durch die Probenzelle (12) geleitet wird, eine Einrichtung zum Vergleichen der gewonnenen Werte mit einem zuvor eingestellten Drift-Grenzwert und Rausch-Grenzwert, und eine Einrichtung, um
(i) entweder festzustellen, daß der Detektor sich in dem analysefähigen Zustand stabilisiert hat, wenn der Driftwert kleiner ist als der Drift-Grenzwert und gleichzeitig der Rauschwert kleiner ist als der Rausch-Grenzwert, oder
(ii) um die Operation der Drift- und Rauschwertgewinnung und des Vergleichs dieser Werte erneut durchzuführen, wenn der Driftwert größer ist als der Drift-Grenzwert und/oder der Rauschwert größer ist als der Rausch-Grenzwert.

4. Detektor nach einem der vorstehenden Ansprüche, ferner mit
einer Einrichtung zum Bekanntgeben, daß der Status, in dem der Driftwert größer ist als der Drift-Grenzwert und/oder der Rauschwert größer ist als der Rausch-Grenzwert sich über eine vorbestimmte Zeit hinaus fortgesetzt hat.

5. Detektor nach Anspruch 3 oder 4, ferner mit einer Einrichtung zum Gewinnen eines Driftwerts durch Messung des Werts des Ausgabesignals in vorbestimmten Zeitintervallen, Berechnen eines absoluten Differenzwerts zwischen dem Wert des Ausgabesignals zu der betreffenden Zeit und dem Wert des Ausgabesignals zu einer vorangegangenen Zeit, und Mitteln der berechneten Absolutwerte.

6. Detektor nach Anspruch 3 oder 4, ferner mit einer Einrichtung zum Gewinnen des Rauschwerts durch Mitteln von zugehörigen Instantanrauschwerten von mehreren Blöcken, die in vorbestimmte Zeitintervalle unterteilt sind.

7. Flüssigkeitschromatograph, der mit dem Differential-Brechungsindex-Detektor nach einem der vorstehenden Ansprüche ausgerüstet ist.

## Revendications

1. Détecteur différentiel d'indice de réfraction comprenant une cellule de référence (11) pour introduire ou transférer une solution de référence, une cellule à échantillon (12) pour transférer une solution contenant un échantillon, des moyens de commutation (19) pour permettre à un éluant, qui est sorti de la cellule à échantillon (12), de pénétrer de façon intermittente dans la cellule de référence (11), une source de lumière (21) pour projeter une lumière sur lesdites deux cellules (11,12), une partie de détection (23) pour détecter une lumière transmise par les cellules respectives (11,12), une partie (24) de traitement de signal pour appliquer un traitement prédéterminé à un signal de sortie envoyé par ladite partie de détection (23), **caractérisé par** :
- des moyens (8) pour exécuter séquentiellement
(a) une opération de purge initial de la solution pour réaliser la purge de ladite cellule à échantillon (12) et de ladite cellule de référence (11) avec un éluant au moyen du passage de l'éluant à travers les cellules (11,12) lors du démarrage du fonctionnement dudit détecteur,
(b) une opération de purge d'une solution de stabilisation pour permettre d'exécuter la purge de l'éluant de ladite cellule à échantillon (12) et de ladite cellule de référence (11) et, simultanément, pour confirmer la condition stable de ces cellules, et
dans lequel les moyens pour exécuter l'opération de purge de la solution de stabilisation comprennent
- des moyens pour obtenir une valeur de dérive et une valeur de bruit à partir dudit signal de sortie, alors que les moyens de commutation (19) sont dans un état permettant l'écoulement de l'éluant depuis la cellule à échantillon (12) dans la cellule de référence (11),
- des moyens pour comparer les valeurs obtenues avec une limite de dérive et une limite de bruit réglées au préalable, et
- des moyens pour
i) soit empêcher l'éluant qui a traversé ladite cellule à échantillon (12) de traverser ladite cellule de référence (11) lorsque ladite valeur de dérive est inférieure à ladite limite de dérive et que simultanément ladite valeur de bruit est inférieure à ladite limite de bruit,
ii) soit exécuter à nouveau l'opération d'obtention de ladite valeur de dérive et de ladite valeur de bruit et comparer ces valeurs à la limite de dérive et à la limite de bruit réglées antérieurement lorsque ladite valeur de dérive est supérieure à ladite limite de dérive et/ou que ladite valeur de bruit est supérieure à ladite limite de bruit,
(c) une opération de confirmation de stabilité destinée à confirmer si ledit détecteur s'est stabilisé ou non dans une condition permettant une analyse, par passage dudit éluant uniquement dans ladite cellule à échantillon (12), et dans lequel le dispositif comprend en outre
- des moyens pour annoncer que ledit détecteur s'est stabilisé dans 1a condition permettant l'analyse.

2. Détecteur selon la revendication 1, dans lequel des moyens sont prévus pour activer les moyens (19) pour le passage intermittent d'un éluant ayant traversé ladite cellule à échantillon conformément à une procédure en série dans le temps, réglée au préalable, pendant l'opération de purge initiale de la solution.

3. Détecteur selon la revendication 1 ou 2, dans lequel les moyens d'exécution de l'opération de confirmation de stabilité comprennent des moyens pour obtenir une valeur de dérive et une valeur de bruit à partir dudit signal de sortie, alors que l'éluant traverse uniquement ladite cellule à échantillon (12), des moyens pour comparer les valeurs obtenues à une limite de dérive et à une limite de bruit réglées précédemment, et des moyens pour
i) soit évaluer que le détecteur s'est stabilisé dans la condition permettant l'analyse lorsque ladite valeur de dérive est inférieure à ladite limite de dérive et que simultanément, ladite valeur de bruit est inférieure à ladite limite de bruit,
ii) soit exécuter à nouveau l'opération d'obtention de ladite valeur de dérive et de ladite valeur de bruit et comparer ces valeurs, lorsque ladite valeur de dérive est supérieure à ladite limite de dérive et/ou que ladite valeur de bruit est supérieure à ladite limite de bruit.

4. Détecteur selon l'une quelconque des revendications précédentes, comprenant en outre des moyens pour annoncer que l'état, dans lequel ladite valeur de dérive est supérieure à ladite limite de dérive et/ou ladite valeur de bruit est supérieure à ladite limite de bruit, s'est maintenu au-delà d'un intervalle de temps prédéterminé.

5. Détecteur selon la revendication 3 ou 4, comprenant en outre des moyens pour obtenir une valeur de dérive par mesure de la valeur dudit signal de sortie à des intervalles de temps prédéterminés, calcul d'une valeur absolue de la différence entre la valeur du signal de sortie à l'instant considéré et la valeur du signal de sortie à un instant précédent, et formation de la moyenne des valeurs absolues calculées.

6. Détecteur selon la revendication 3 ou 4, comprenant en outre des moyens pour obtenir ladite valeur de bruit par formation de la moyenne de valeurs de bruit instantanées respectives d'une pluralité de blocs divisés à des intervalles de temps prédéterminés.

7. Chromatographe en phase liquide équipé du détecteur différentiel d'indice de réfraction décrit dans l'une quelconque des revendications précédentes.
